**Europäisches Patentamt**

**European Patent Office**

**Office européen des brevets**

(11) Veröffentlichungsnummer: **0 049 756**
**B1**

(12) **EUROPÄISCHE PATENTSCHRIFT**

(45) Veröffentlichungstag der Patentschrift:
**27.12.84**

(51) Int. Cl.³: **G 01 F 1/46,** G 01 L 13/00

(21) Anmeldenummer: **81106810.5**

(22) Anmeldetag: **01.09.81**

(54) **Vorrichtung zum Messen des Differenzdruckes.**

(30) Priorität: **09.10.80 DE 3038180**

(43) Veröffentlichungstag der Anmeldung:
**21.04.82 Patentblatt 82/16**

(45) Bekanntmachung des Hinweises auf die Patenterteilung:
**27.12.84 Patentblatt 84/52**

(84) Benannte Vertragsstaaten:
**AT CH DE FR IT LI NL**

(56) Entgegenhaltungen:
**DE - A - 2 842 414**
**DE - A - 2 842 676**
**DE - B - 1 935 989**
**GB - A - 1 574 702**
**US - A - 1 508 017**

(73) Patentinhaber: **IWK Regler und Kompensatoren GmbH,**
**Singerstrasse, D-7513 Stutensee (DE)**

(72) Erfinder: **Fehler, Dieter, Dr., Dipl.-Phys.,**
**Posselstrasse 13, D-7500 Karlsruhe 41 (DE)**

(74) Vertreter: **Dr.-Ing. Hans Lichti Dipl.-Ing. Heiner Lichti**
**Dipl.-Phys. Dr. Jost Lempert, Postfach 41 07 60 Durlacher**
**Strasse 31, D-7500 Karlsruhe 41 (DE)**

ACTORUM AG

## Beschreibung

Die Erfindung betrifft eine Vorrichtung zum Messen des Differenzdrucks in einem Medium durchströmten Rohr mit zwei in Durchflussrichtung hintereinander angeordneten, sich in das Rohr hinein erstreckenden länglichen Sondenkörpern identischer Aussenkontur, die Öffnungen aufweisen, die über einen Kanal in dem jeweiligen Sondenkörper mit einer Messapparatur verbunden sind, wobei einer der Sondenkörper die Öffnungen entgegen der Strömungsrichtung zur Messung des dynamischen Drucks und der andere Sondenkörper die Öffnungen in Strömungsrichtung zur Messung des statischen Drucks aufweist.

Eine derartige Messvorrichtung ist prinzipiell aus der US-A-1 508 017 bekannt, wobei die beiden Sonden in einer gemeinsamen Hülle als Messkopf eingeschlossen sind und aus Rohren 12, 16 mit Kreisquerschnitt bestehen. Bei dieser bekannten Messvorrichtung ist es nachteilig, dass aufgrund des ungünstigen Strömungsquerschnitts des Messkopfes mit den beiden dicht hintereinander angeordneten Sonden mit Kreisquerschnitt nur ein relativ enger Strömungsbereich existiert, in dem die Umströmung der Sonde für den statischen Druck überkritisch erfolgt, so dass sich ein relativ kleiner linearer Messbereich ergibt. Weiterhin kommt es insbesondere aufgrund der dichten Hintereinanderschaltung der beiden Sonden im Messkopf zur gegenseitigen Beeinflussung der Messdrücke an den beiden Sonden durch die jeweils andere Sonde. Von Nachteil ist auch, dass die Voluminosität des Messkopfes einen relativ grossen verbleibenden Druckverlust in der zu messenden Strömung verursacht, was insbesondere bei Rohren mit kleinen Nennweiten zum Tragen kommt.

Aus der DE-A-28 42 676 sind weiterhin Messvorrichtungen mit kantig ausgebildeten Sonden für den statischen Druck bekannt, die gegenüber der vorgenannten Messvorrichtung eine Vergrösserung des überkritischen Umströmungsbereichs der Sonde und damit einen grösseren Messbereich bewirken. Die bekannte Vorrichtung ist aufwendig, insbesondere in fertigungstechnischer Hinsicht, und bedingt aufgrund der Ausgestaltungen der Sonden bzw. der Sondengehäuse ebenfalls einen erheblichen Druckverlust und damit eine Beeinträchtigung der Messgenauigkeit.

Die bekannte Vorrichtung ist weiter recht aufwendig aufgrund der Tatsache, dass im Sondenkörper für den gesamten Druck ein separates Interpolations-Sondenrohr vorgesehen sein muss. Diese Ausgestaltung bedingt darüber hinaus, dass die Aussenabmessungen des Sondenkörpers nicht ausreichend klein gewählt werden können, sondern vielmehr noch recht gross sind, so dass der Druckabfall hinter der Vorrichtung noch unbefriedigend hoch ist. Diese bekannten Sonden sind nicht mit Nennweiten kleiner als 50 mm brauchbar. Auch wird das statische Drucksignal nur an einer Stelle – nämlich in der Rohrmitte – erfasst. Die komplizierte Ausgestaltung verursacht

recht hohe Kosten. Darüber hinaus ist auch der Messbereich der aus der Praxis bekannt gewordenen Vorrichtung in keiner Weise zufriedenstellend. Die GB-A-15 74 702 beschreibt Rohrmessköpfe mit jeweils einem einzigen rohrförmigen Sondenkörper, in dem Detektoren angeordnet sind, die die aufgenommenen Drücke in elektrische Ausgangssignale umwandeln, wobei das Sondengehäuse in einer Ausgestaltung sternförmig ausgebildet ist. Die Anordnung der Detektoren in den Sondenkörpern bedingt grosse Abmessungen derselben und damit verbundene Nachteile.

Der Erfindung liegt die Aufgabe zugrunde, unter Überwindung der Nachteile der Vorrichtung nach der US-A-1 508 017 eine Vorrichtung zur Differenzdruckmessung in einer strömenden Flüssigkeit zu schaffen, die unter Gewährleistung eines grösseren linearen Messbereichs, Verminderung der gegenseitigen Beeinflussung der Sonden sowie der Druckverluste in der zu messenden Strömung verschiedene Einsatzmöglichkeiten eröffnet.

Erfindungsgemäss wird die genannte Aufgabe durch eine Vorrichtung zum Messen des Differenzdrucks in einem von einem Medium durchströmten Rohr der eingangs genannten Art gelöst, welche dadurch gekennzeichnet ist, dass die Sondenkörper den gleichen Querschnitt eines Sechskants aufweisen; dass die Öffnungen jedes Sondenkörpers jeweils an einer Längskante desselben angeordnet sind; und dass aufeinander zugerichtete Längskanten der Sondenkörper mindestens einen dem Querdurchmesser der Sondenkörper entsprechenden Abstand haben.

Die Kombination der erfindungsgemässen Merkmale gewährleistet eine grundsätzliche Verbesserung bekannter Vorrichtungen. Durch die Ausgestaltung mit sechs oder mehr Kanten und die Ausrichtung der Sondenkörper wird die Strömung der Sondengrenzschicht gezielt gestört. Dadurch ist es nicht nur möglich, eine unterkritische Sondenumströmung bei unveränderter Reynolds-Zahl der Grundströmung überkritisch ablaufen zu lassen. Es ist damit möglich, auch bei niedrigeren Reynolds-Zahlen der Grundströmung eine überkritische Umströmung zu erhalten als bei ungestörter Grenzschichtströmung. Daraus ergibt sich ein grösserer Linearitätsbereich, folglich auch ein grösserer Messbereich. Weiter werden folglich durch diesen Eingriff in die Sondengrenzschicht Viskositätseinflüsse und Temperaturabhängigkeiten stark abgeschwächt.

Weiterhin wird durch die erfindungsgemässe Ausgestaltung der Vorrichtung eine Reduzierung der Druckverluste auf der im Rohr angeordneten Messvorrichtung bewirkt. Insbesondere sechs Kanten ermöglichen den beschriebenen Eingriff in die Sondengrenzschicht bei relativ kleinen Sondendurchmessern im Verhältnis zu vorgegebenen Innendurchmessern und somit bei geringeren verbleibenden Druckverlusten. Hierzu trägt auch weiter bei, dass durch die Möglichkeit des Verzichts auf ein inneres Interpolationsrohr ein geringerer Durchmesser der Sondenkörper erreicht werden konnte. Schliesslich wird auch durch den Verzicht auf die komplizierte Ausgestaltung, wie diese bei der aus der Praxis bekannten Sonde gegeben ist, eine Reduzierung der Kosten erreicht. Hierzu trägt die grundsätzliche, symmetrische bzw. identische Ausgestaltung der einzelnen Sondenkörper der erfindungsgemässen Vorrichtung bei. Durch die separate Anordnung der einzelnen Sondenkörper der erfindungsgemässen Vorrichtung wird eine wechselseitige Beeinflussung vermieden. Darüber hinaus liegt ein wesentlicher Vorteil der erfindungsgemässen Vorrichtung in der Möglichkeit zum Messeinsatz bei variablen Durchflussrichtungen in einem Rohr, da mit symmetrischen Sonden gearbeitet wird.

Gemäss einer bevorzugten Ausgestaltung der Vorrichtung ist vorgesehen, dass in jedem Sondenkörper zwei über die Breite des Rohres symmetrisch angeordnete Sondenöffnungen vorgesehen sind.

Bei geringen Durchmessern eines flüssigkeitsführenden Rohres von Nennweiten von bis etwa 40 mm ist es vorteilhaft, dass die Sondenkörper in einer gemeinsamen Längsebene des Rohres angeordnet sind. Obwohl grundsätzlich die Sondenöffnungen auch voneinander fort ausgerichtet sein können, ist es insbesondere bei kleineren Nennweiten vorteilhaft vorzusehen, dass die Sondenkörper mit aufeinander zu gerichteten Sondenöffnungen angeordnet sind. Bei dieser Anordnung ist dann nämlich der Einfluss der in Strömungsrichtung ersten Sonde auf die zweite Sonde kleiner als bei der erstgenannten Anordnung.

Demgegenüber ist es bei Rohren mit Nennweiten von mehr als 40 mm zu bevorzugen, dass die Sondenkörper in sich kreuzenden Längsebenen des Rohres angeordnet sind. Hierbei ist es dann im übrigen vorteilhaft, dass die Sondenkörper mit voneinander abgewandt ausgerichteten Sondenöffnungen angeordnet sind. Diese Ausgestaltung ermöglicht insbesondere Vierpunkt-Messungen im Gesamtquerschnitt des Rohres. Hierdurch werden kürzere Einlaufstrecken und genauere Messungen bedingt.

Da gegenüber den bekannten Vorrichtungen nach dem Stand der Technik erfindungsgemäss mindestens eine zusätzliche Messstelle vorgesehen ist, erhält man bei derart «gekreuzten» Sonden zusätzliche Informationen, so dass ein Verzicht auf das Interpolationsrohr der bekannten Vorrichtungen ohne weiteres möglich ist.

Gemäss einer weiteren bevorzugten Ausgestaltung ist vorgesehen, dass die Sondenkörper beide an einem vom unteren Scheitelpunkt des Rohres abweichenden Punkt durch die Rohrwand treten. Durch diese Ausgestaltung wird vermieden, dass Verunreinigungen oder Ablagerungen im Rohr, die sich im wesentlichen um den unteren Scheitelpunkt des Rohres konzentrieren, die Messungen beeinflussen.

Weitere Vorteile und Merkmale der Erfindung ergeben sich aus den Ansprüchen und aus der nachfolgenden Beschreibung, in der Ausführungsbeispiele der Erfindung anhand der Zeichnung im einzelnen erläutert sind. Dabei zeigt bzw. zeigen:

Fig. 1 einen Sondenkörper der erfindungsgemässen Vorrichtung (a) in Seitenansicht und (b) in einer Sicht in Richtung Pfeiles B;

Fig. 2 ein Ausführungsbeispiel der erfindungsgemässen Vorrichtung mit in einer gemeinsamen Längsebene des Rohres parallel zueinander angeordneten Sondenkörpern, teilweise im Schnitt; und

Fig. 3 eine Vorrichtung mit gekreuzt angeordneten Sondenkörpern in der Sicht der Durchflussrichtung.

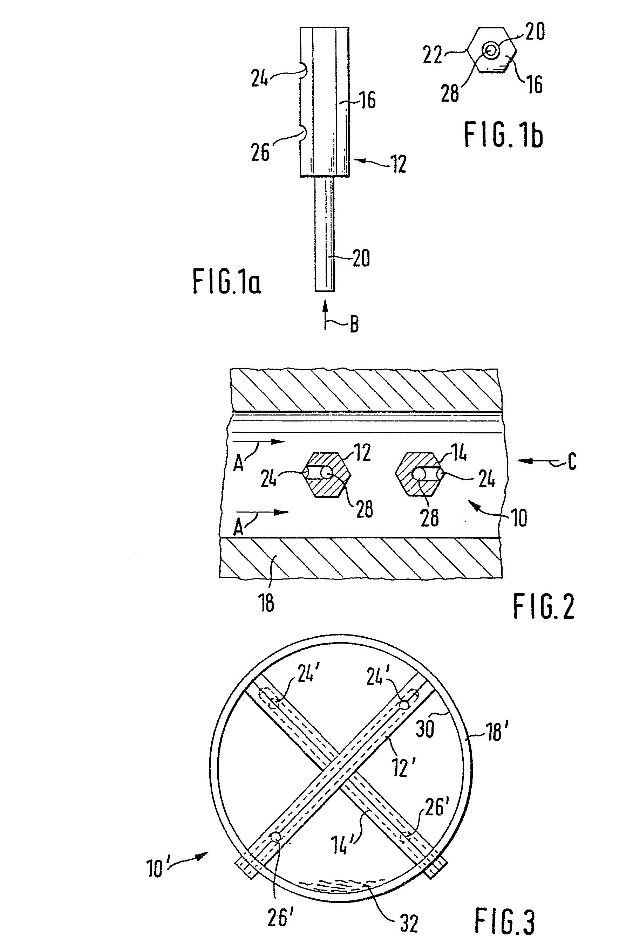

Die erfindungsgemässe Vorrichtung 10 bzw. 10' weist zwei identische Sondenkörper 12 und 14 bzw. 12' und 14' auf. Die Sondenkörper werden im folgenden anhand des in der Fig. 1 dargestellten Sondenkörpers 12 beschrieben. Der Sondenkörper 12 hat eine längliche Gestalt. Er besteht aus einem Sondenteil 16, mit dem der Sondenkörper im Inneren eines Rohres 18 bzw. 18' angeordnet wird, und einem Verbindungsansatz 20, mit dem der Sondenkörper 12 aus einem Rohr herausgeführt wird. Der Sondenkörper 12 und dabei insbesondere sein im Rohr 18 bzw. 18' anzuordnender Sondenteil 16 weist im Schnitt bzw. in der Sicht des Pfeiles B (Fig. 1) die Gestalt eines gleichmässigen Sechsecks auf. Bei der Anordnung im Rohr 18 bzw. 18' wird dabei eine Kante 22 der Strömung – die in der Fig. 2 durch die Pfeile A symbolisiert ist – entgegen gerichtet. Im Rohrkörper 12 sind an dieser Kante 22 zwei Sondenöffnungen 24 und 26 vorgesehen, die mit einem sich in Längsrichtung des Sondenkörpers 12 erstreckenden Leitungshohlraum 28 in Verbindung stehen. Diese Leitungshohlräume 28 führen direkt zur Messapparatur (nicht gezeigt) bzw. sind mit dieser verbunden.

Eine erste Ausführungsform der erfindungsgemässen Vorrichtung 10, die insbesondere bei Rohren mit engerem Querschnitt eingesetzt wird, ist in Fig. 2 dargestellt. Wie aus Fig. 2 ersichtlich ist, weist die erfindungsgemässe Vorrichtung 10 zwei Sondenkörper 12, 14 auf, die im Rohr in einer gemeinsamen Längsmittelebene des Rohres 18 mit Abstand zueinander angeordnet sind. Die Öffnung 24 des stromauf liegenden Sondenkörpers 12 ist dabei der Strömung A entgegen gerichtet. Die Sondenöffnung 24 des Sondenkörpers 14, der stromab liegt, ist in Richtung der Strömung A ausgerichtet.

Durch den stromauf liegenden Sondenkörper 12 wird über die Sondenöffnungen 24, 26 der gesamte Strömungsdruck aufgenommen, während die Aufnahme des statischen Druckes in Strömungsrichtung liegt. Durch Differenzdruckbildung in einer herkömmlichen Apparatur kann der dynamische Druck und aus diesem durch Radizierung die Geschwindigkeit der Strömung bestimmt werden.

In Fig. 3 ist eine weitere Ausführungsform der erfindungsgemässen Vorrichtung 10' dargestellt, bei der die Sondenkörper 12', 14' gekreuzt zueinander angeordnet sind. Eine solche Ausführungsform der Vorrichtung wird insbesondere bei Rohren 18' mit grossem Durchmesser oder grosser Nennweite eingesetzt. Die Blickrichtung bei Fig. 3 ist entlang der Strömungsrichtung. Es ergibt sich, dass die Sondenöffnungen 24', 26' der Sonde 12' der Strömung entgegengerichtet sind, während die entsprechenden Sondenöffnungen des Sondenkörpers 14' in Strömungsrichtung ausgerichtet sind. Durch die aufgenommenen Drücke kann wieder in bekannter Weise der dynamische oder Staudruck bestimmt werden.

Weiterhin ist der Fig. 3 zu entnehmen, dass keiner der beiden Sondenkörper senkrecht steht. Die beiden Sondenkörper sind vielmehr in der in Fig. 3 dargestellten Sicht unter einem endlichen Winkel zur Vertikalen angeordnet. So wird verhindert, dass Verunreinigungen, die in Fig. 3 mit 32 bezeichnet sind, das Messergebnis verfälschen können.

Die obige Beschreibung setzte eine Strömungsrichtung in Richtung der Pfeile A voraus. Es ist aber ohne weiteres einsichtig, dass aufgrund der symmetrischen Ausgestaltung der Sondenkörper 12 und 14 bzw. 12' und 14' die Strömungsrichtung auch umgekehrt werden kann und in der Fig.2 entlang des Pfeiles C und in der Fig. 3 dem Betrachter entgegen gerichtet sein kann, ohne dass dies an den Messmöglichkeiten irgend etwas ändert. Aufgrund der symmetrischen Ausgestaltung der erfindungsgemässen Vorrichtung kann diese, im Gegensatz zu Vorrichtungen nach dem Stand der Technik, bei variablen Durchflussrichtungen, also Umkehr der Durchflussrichtungen, gleichermassen eingesetzt werden.

Die in der vorstehenden Beschreibung, in der Zeichnung sowie in den Ansprüchen offenbarten Merkmale der Erfindung können sowohl einzeln, als auch in beliebigen Kombinationen für die Verwirklichung der Erfindung in ihren verschiedenen Ausführungsformen wesentlich sein.

**Patentansprüche**

1. Vorrichtung zum Messen des Differenzdrucks in einem von einem Medium durchströmten Rohr (18; 18') mit zwei in Durchflussrichtung hintereinander angeordneten, sich in das Rohr hinein erstreckenden, länglichen Sondenkörpern (12, 14; 12', 14') identischer Aussenkontur, die Öffnungen (24, 26; 24', 26') aufweisen, die über einen Kanal (28) in dem jeweiligen Sondenkörper mit einer Messapparatur verbunden sind, wobei einer der Sondenkörper die Öffnungen entgegen der Strömungsrichtung zur Messung des dynamischen Drucks und der andere Sondenkörper die Öffnungen in Strömungsrichtung zur Messung des statischen Drucks aufweist, dadurch gekennzeichnet, dass die Sondenkörper (12, 14; 12', 14') den gleichen Querschnitt eines Sechskants aufweisen; dass die Öffnungen (24, 26; 24', 26') jedes Sondenkörpers jeweils an einer Längskante desselben angeordnet sind; und dass aufeinander zugerichtete Längskanten der Sondenkörper mindestens einen dem Querdurchmesser der Sondenkörper entsprechenden Abstand haben.

2. Vorrichtung nach Anspruch 1, dadurch gekennzeichnet, dass die Anzahl der Öffnungen (24, 26; 24', 26') in jedem Sondenkörper (12, 14; 12', 14') zwei ist und die Öffnungen (24, 26, 24', 26') über die Breite des Rohres (18, 18') hin symmetrisch angeordnet sind.

3. Vorrichtung nach Anspruch 1 oder 2, dadurch gekennzeichnet, dass die Sondenkörper (12, 14; 12', 14') derart ausgerichtet sind, dass die Öffnungen (24, 26; 24', 26') voneinander fortweisen.

4. Vorrichtung nach einem der Ansprüche 1 oder 2, dadurch gekennzeichnet, dass die Sondenkörper (12, 14; 12', 14') derart ausgerichtet sind, dass die Öffnungen (24, 26; 24', 26') aufeinander zu weisen.

5. Vorrichtung nach einem der vorangehenden Ansprüche, dadurch gekennzeichnet, dass die Sondenkörper (12, 14) in einer gemeinsamen Längsebene des Rohres (18) angeordnet sind.

6. Vorrichtung nach einem der Ansprüche 1 bis 4, dadurch gekennzeichnet, dass die Sondenkörper (12', 14') in sich kreuzenden Längsebenen des Rohres (18) angeordnet sind.

7. Vorrichtung nach Anspruch 6, dadurch gekennzeichnet, dass Längsebenen unter einem Winkel von 90° gekreuzt sind.

8. Vorrichtung nach Anspruch 6 oder 7, dadurch gekennzeichnet, dass die Sondenkörper (12', 14') beide an einem vom unteren Scheitelpunkt des horizontalen Rohres (18') abweichenden Punkt durch die Rohrwand (30) treten.

**Revendications**

1. Dispositif de mesure de la pression différentielle dans un tube (18; 18') parcouru par un milieu, comprenant deux corps de sonde allongés (12, 14; 12', 14') de contour extérieur identique, s'étendant vers l'intérieur du tube, disposés l'un derrière l'autre dans la direction d'écoulement, qui présentent des ouvertures (24, 26; 24', 26') reliées à un appareillage de mesure par l'intermédiaire d'un canal (28) dans chaque corps de sonde, l'un des corps de sonde présentant les ouvertures à l'opposé du sens du courant pour mesurer la pression dynamique et l'autre corps de sonde présentant les ouvertures dans le sens du courant pour mesurer la pression statique, caractérisé en ce que les corps de sonde (12, 14; 12', 14') présentent la même section transversale hexagonale; que les ouvertures (24, 26; 24', 26') de chaque corps de sonde sont disposées chacune sur une arête longitudinale de celui-ci; et que des arêtes longitudinales dirigées l'une vers l'autre des corps de sonde sont séparées par une distance correspondant au moins au diamètre transversal des corps de sonde.

2. Dispositif selon la revendication 1, caractérisé en ce que le nombre des ouvertures (24, 26; 24', 26') dans chaque corps de sonde (12, 14; 12', 14') est deux et que les ouvertures (24, 26; 24', 26') sont disposées symétriquement sur la largeur du tube (18, 18').

3. Dispositif selon la revendication 1 ou la revendication 2, caractérisé en ce que les corps de sonde (12, 14; 12', 14') sont orientés de telle sorte que les ouvertures (24, 26; 24', 26') sont tournées à l'opposé les unes des autres.

4. Dispositif selon la revendication 1 ou la revendication 2, caractérisé en ce que les corps de sonde (12, 14; 12', 14') sont orientés de telle façon que les ouvertures (24, 26; 24', 26') sont tournées les unes vers les autres.

5. Dispositif selon l'une des revendications précédentes, caractérisé en ce que les corps de sonde (12, 14) sont disposés dans un plan longitudinal commun du tube (18).

6. Dispositif selon l'une des revendications 1 à 4, caractérisé en ce que les corps de sonde (12', 14') sont disposés dans des plans longitudinaux du tube (18) qui se croisent.

7. Dispositif selon la revendication 6, caractérisé en ce que les plans longitudinaux se croisent sous un angle de 90°.

8. Dispositif selon la revendication 6 ou la revendication 7, caractérisé en ce que les corps de sonde (12', 14') traversent tous deux la paroi (30) du tube en un point qui s'écarte du point le plus bas du tube horizontal (18').

## Claims

1. Apparatus for measuring the differential pressure in a tube (18, 18') through which flows a medium, with two elongated probe bodies (12, 14; 12', 14') having an identical outer contour, which are successively arranged and extend into the tube, whilst being connected to a measuring device by means of a channel (28) in the particular probe body, one probe body having the openings counter to the flow direction for measuring the dynamic pressure and the other probe body has the openings in the flow direction for measuring the static pressure, characterized in that the probe bodies (12, 14; 12', 14') have the same cross-section of a hexagon, that the openings (24, 26; 24'. 26') of each probe body are in each case arranged on a longitudinal edge thereof and that the longitudinal edges of the probe bodies which are directed to one another have a spacing at least corresponding to the transverse diameter of the probe bodies.

2. Apparatus according to claim 1, characterized in that there are two openings (24, 26; 24', 26') in each probe body (12, 14; 12', 14') and that the openings (24, 26; 24', 26') are arranged symmetrically over the width of the tube (18, 18').

3. Apparatus according to claims 1 or 2, characterized in that the probe bodies (12, 14; 12', 14') are aligned in such a way that the openings (24, 26; 24', 26') point away from one another.

4. Apparatus according to one of the claims 1 or 2, characterized in that the probe bodies (12, 14; 12', 14') are aligned in such a way that the openings (24, 26; 24', 26') point towards one another.

5. Apparatus according to one of the preceding claims, characterized in that the probe bodies (12, 14) are arranged in a common longitudinal plane of the tube (18).

6. Apparatus according to one of the claims 1 to 4, characterized in that the probe bodies (12', 14') are arranged in intersecting longitudinal planes of tube (18).

7. Apparatus according to claim 6, characterized in that the longitudinal planes intersect at an angle of 90°.

8. Apparatus according to.claims 6 or 7, characterized in that both the probe bodies (12', 14') pass through the tube wall (30) at a point diverging from the lower apex of the horizontal tube (18').

FIG.1a  FIG.1b  FIG.2  FIG.3